# EUROPEAN PATENT SPECIFICATION

(11) **EP 2 033 770 B1**
(45) Date of publication and mention of the grant of the patent: **27.06.2012**
(21) Application number: 08100124.0
(22) Date of filing: 04.01.2008
(51) Int. Cl.: B29D 7/01, B32B 3/00, B32B 3/30, B32B 27/00, B32B 27/12, B05D 7/12, H01F 1/08, D06N 3/00

(54) **Resin surface layer having a visual effect of 3D structure and method of fabricating the same, composite having the resin surface layer and method of fabricating the same**
Harzoberflächenschicht mit einem visuellen Effekt in der Form einer 3D-Struktur und Herstellungsverfahren dafür, Zusammensetzung mit der Harzoberflächenschicht und Herstellungsverfahren dafür
Couche de surface en résine ayant un effet visuel 3D et son procédé de fabrication, composite disposant de la couche de surface en résine et son procédé de fabrication

(30) Priority: 05.09.2007 TW 96132988
(43) Date of publication of application: 11.03.2009
(73) Proprietor: San Fang Chemical Industry Co., Ltd., Kaohsiung Hsien, Taiwan (TW)
(72) Inventor: Feng, Chung-Chih, Kaohsiung (TW); Wu, Pai-Hsiang, Kaohsiung (TW); Huang, Chien-Chia, Kaohsiung (TW); Wu, Cheng-Chia, Kaohsiung (TW); Wang, Chih-Shih, Kaohsiung (TW)
(74) Representative: 2K Patentanwälte Blasberg Kewitz & Reichel

(56) References cited:
- EP-A1- 0 556 449
- DE-A1- 4 419 173
- US-A1- 2005 100 710
- US-A1- 2006 272 770

## Description

### BACKGROUND OF THE INVENTION

### 1. Field of the Invention

The present invention relates to a resin surface layer and a method of fabricating the same. More particularly, the present invention relates to a resin surface layer not having a physical texture of bumps and pits but capable of exhibiting a visual effect of 3D texture and a method of fabricating the same.

### 2. Description of the Related Art

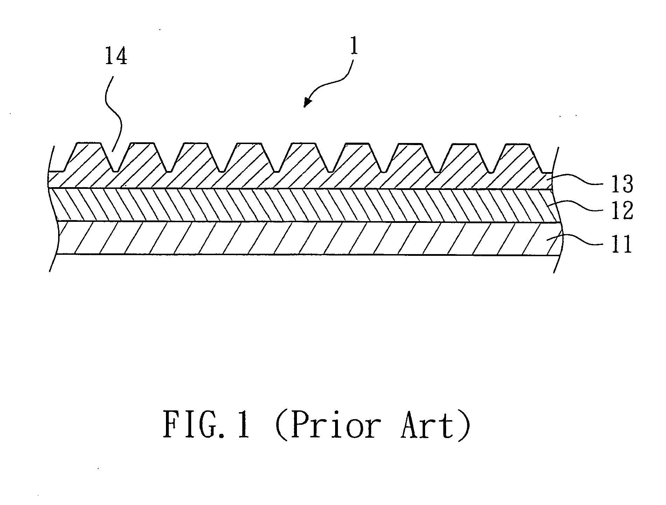

FIG. 1 shows a schematic cross-sectional view of a conventional composite. The conventional composite 1 is artificial leather, including a bottom cloth layer 11, an intermediate layer 12, and a surface layer 13. The bottom cloth layer 11 generally is a woven fabric, a nonwoven fabric, leather, a microfiber, or a resin. The intermediate layer 12 is formed on the bottom cloth layer 11, and generally is a foam layer. The surface layer 13 is located on the intermediate layer 12 and is made of PU resin.

In order to improve the real-life quality of the conventional composite 1, a texture 14 is formed on the surface of the surface layer 13. The texture 14 is a physical texture of bumps and pits which is mostly formed by means of texture contact and transfer, such as printing, embossing, or release paper laminating, or directly polishing the surface of the surface layer 13. However, the above methods of forming a texture have the following shortcomings. First, the methods will influence the surface flatness of the surface layer 13. Second, the pattern of the formed texture is limited, and the 3D textures cannot be achieved.

EP 0 556 449 A1 discloses a method of fabricating a resin film intended to be a surface layer laminated to most various substrates, including soft and flexible substrates. A layer comprising a transparent resin and a multiplicity of magnetic non-spherical particles is applied in liquid state on a surface, and a pattern (effectively threedimensional) is generated by the application of a magnetic field, after which the layer is solidified.

DE 44 19 173 A1 discloses glossy pigments that can be magnetized. These pigments are based on multi-layered metallic substrates that are coated, plate-shaped and non-ferromagnetic. The pigments comprise a first ferromagnetic layer, a second layer, which is substantially made of silcon-oxide or similar compounds, and a third layer consisting of a metal oxide.

US 2005/0100710 A1 discloses a flame-proof environmentally friendly artificial leather including a substrate, an adhesive layer, an intermediate layer and a surface layer. The artificial leather includes the intermediate layer made of a high solid-content polyurethane resin compound added with a chlorine-free flame-proof agent. The high solid-content polyurethane resin compound is made through mixing the chlorine-free flame-proof agent, polyurethane resin with a solid-content higher than 50% and a curing agent. Moreover, a process is disclosed for making such an artificial leather.

US 2006/0272770 A1 discloses a method for making artificial leather with superficial texture. In the method, a substrate is coated, in a non-overall manner, with a wet polyurethane resin. After curing, there is provided a polyurethane resin coated on releasing paper. Thus, a semi-product is made. Texture of the releasing paper is transferred to a surface of the semi-product. Then, the semi-product with the texture on the surface is coated with a layer of a chemical. A machine is used to heat and flatten the surface of the semi-product. Finally, the semi-product is physically finished by forces so that the surface of the final product is formed with texture like that of real leather.

As can be concluded from the foregoing, it is necessary to provide a resin surface layer and a method of fabricating the same to solve the above problems.

### SUMMARY OF THE INVENTION

It is an object of the present invention to provide an improved method for fabricating a composite having such a resin surface layer and to provide an improved composite produced using such a method.

These problems are solved by a method for fabricating a composite according to claim 1 and by a composite according to claim 6. Further advantageous embodiments are the subject-matter of the dependent claims.

The present invention is still directed to provide a composite having the above resin surface layer.

### BRIEF DESCRIPTION OF THE DRAWINGS

FIG. 1 is a schematic cross-sectional view of a conventional composite;
FIGs. 2 to 4 are schematic views illustrating a method of fabricating a resin surface layer according to a first embodiment of the present invention;
FIG. 5 is a schematic view of a resin surface layer according to a second embodiment of the present invention;
FIG. 6 is a schematic view illustrating a resin surface layer according to a third embodiment of the present invention;
FIGs. 7 and 8 are schematic views illustrating a method of fabricating the composite having a resin surface layer according to the first embodiment of the present invention;
FIGs. 9 and 10 are schematic views illustrating a method of fabricating the composite having a resin surface layer according to the second embodiment of the present invention;
FIGs. 11 and 12 are schematic views illustrating a method of fabricating the composite having a resin surface layer according to the third embodiment of the present invention; and
FIGs. 13 to 15 are schematic views of a method of fabricating the composite having a resin surface layer according to the fourth embodiment of the present invention.

### DETAILED DESCRIPTION OF THE INVENTION

A method of fabricating a resin surface layer, which is related to the present invention, includes the following steps:
(a) providing a base, made of a resin and including a plurality of additive particles randomly distributed in the base;
(b) changing the orientation of the additive particles to arrange the additive particles in a predetermined form; and
(c) drying the base to make a surface of the base exhibit a visual effect of 3D texture.

The material of the base in Step (a) is selected from a group consisting of PU, polyethylene (polyvinyl chloride), acrylic resin, polycarbonate, and epoxy resin. The additive particles in Step (a) are selected from a group consisting of pigments, dyes, colorants, coloring matters, and pearl powders.

In a preferred embodiment, after Step (a), a step of forming the base on a carrier is further included, in which the carrier is selected from a group consisting of a release paper, a woven fabric, a nonwoven fabric, leather, a microfiber, and a resin.

Step (b) includes applying an energy field to polarize the additive particles, so as to change the orientation of the additive particles. As used in the present invention, the word "polarisation" refers to the reaction changing the orientation of the additive particles. The energy field is a magnetic field or electric field. As used herein, the word "orientation" refers to the distribution (density) of the additive particles, or the angle of the additive particles.

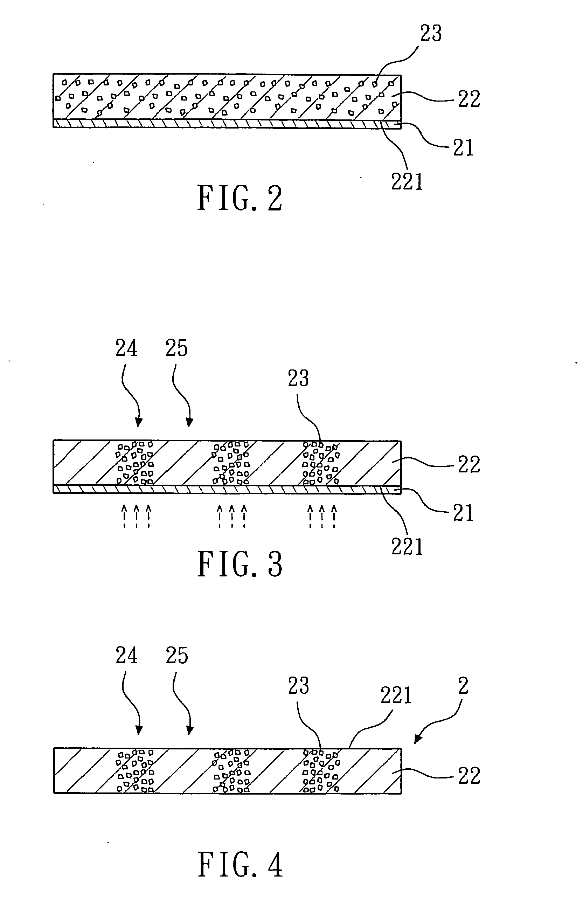

FIGs. 2 to 4 show schematic views illustrating a method of fabricating a resin surface layer according to a first embodiment of the present invention. First, referring to FIG. 2, a base 22 is provided. The material of the base 22 is a single-component PU resin (U-BEST POLYMER INDUSTRY CO., LTD®, AT-508E™). The base 22 includes a plurality of additive particles 23. In this embodiment, the additive particles 23 are pigment particles, and the material of the pigment is 41P series, TAH KONG CHEMICAL INDUSTRIAL CORP. The additive particles 23 are randomly distributed in the base 22.

Thereafter, the base 22 is formed on a release paper (Favini® ASTRAKAN™) 21, so that the base 22 has a surface 221. As the surface of the release paper 21 does not have textures, the surface 221 of the base 22 is smooth and does not have a physical texture of bumps and pits.

Then, referring to FIG. 3, a magnetic field is applied on the lower surface of the release paper 21 to polarize the additive particles 23, so as to change the distribution of the additive particles 23, so that the additive particles 23 have a predetermined density. As shown in the figure, additive particles 23 are dense in a first region 24, while no additive particle is in a second region 25.

Next, referring to FIG. 4, the base 22 is dried and the release paper 21 is removed, so as to form a surface layer 2. After inverting the base 22, the surface 221 of the base 22 can exhibit the visual effect of 3D texture. As shown in the figure, the first region 24 is a bright area, and the second region 25 is a dark area and exhibits a 3D texture of a plurality of cuboids.

Referring to FIG. 4 again, a schematic view of a resin surface layer according to the first embodiment of the present invention is shown. The resin surface layer 2 includes a base 22 and a plurality of additive particles 23. The base 22 has a surface 221, and the material of the base 22 is a resin selected from a group consisting of PU, polyethylene (polyvinyl chloride), acrylic resin, polycarbonate, and epoxy resin. In this embodiment, the material of the base 22 is a single-component PU resin (U-BEST POLYMER INDUSTRY CO., LTD®, AT-508E™). The surface 221 of the base 22 is smooth and does not have the physical texture of bumps and pits.

The additive particles 23 are located in the base 22. The additive particles 23 are selected from a group consisting of pigments, dyes, colorants, coloring matters, and pearl powders. In this embodiment, the additive particles 23 are pigment particles, and the material of the pigment is 41P series, TAH KONG CHEMICAL INDUSTRIAL CORP. The additive particles 23 are arranged in a predetermined form instead of randomly distributed in the base 22, so that the surface 221 of the base 22 can exhibit the visual effect of 3D texture. In this embodiment, the additive particles 23 have a predetermined density. That is, the density of the additive particles 23 in the first region 24 is different from that of the additive particles 23 in the second region 25, so that the first region 24 is a bright area, and the second region 25 is a dark area and exhibits the 3D texture of cuboids.

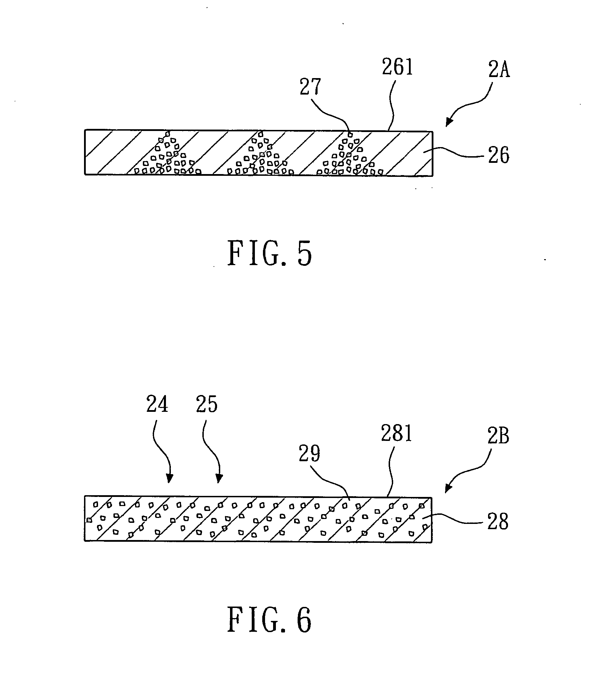

FIG. 5 shows a schematic view of a resin surface layer according to a second embodiment of the present invention. The resin surface layer 2A includes a base 26 and a plurality of additive particles 27. The base 26 is the same as the base 22 of the first embodiment. The additive particles 27 are substantially the same as the additive particles 23 of the first embodiment, except that the additive particles 27 are arranged into a triangular shape. Thus, the 3D texture of a plurality of prisms can be seen as if viewed from a surface 261 of the base 26.

FIG. 6 shows a schematic view of a resin surface layer according to a third embodiment of the present invention. The resin surface layer 2B includes a base 28 and a plurality of additive particles 29. The base 28 is the same as the base 22 of the first embodiment. The additive particles 29 are substantially the same as the additive particles 23 of the first embodiment, except that the orientation of the additive particles 29 is different. In this embodiment, after the additive particles 29 are polarized, the angles of the additive particles 29 are changed, so that the additive particles 29 have a predetermined density. As shown in the figure, the angle of the additive particles 29 in the first region 24 is different from the angle of the additive particles 29 in the second region 25. Therefore, although the additive particles 29 are uniformly distributed in the base 28, due to the distribution of additive particles at a specific angle, the first region 24 is a bright area, and the second region 25 is a dark area. Thus, a surface 281 of the base 28 exhibits the 3D texture of a plurality of cuboids, which is the same effect as that of the first embodiment.

Accordingly, in the present invention, the visual effects of any 3D textures can be achieved by controlling the energy field in order to control the orientation of the additive particles.

The above resin surface layer may be used alone, or may be used in a layer structure of a composite, which is described in the following embodiments.

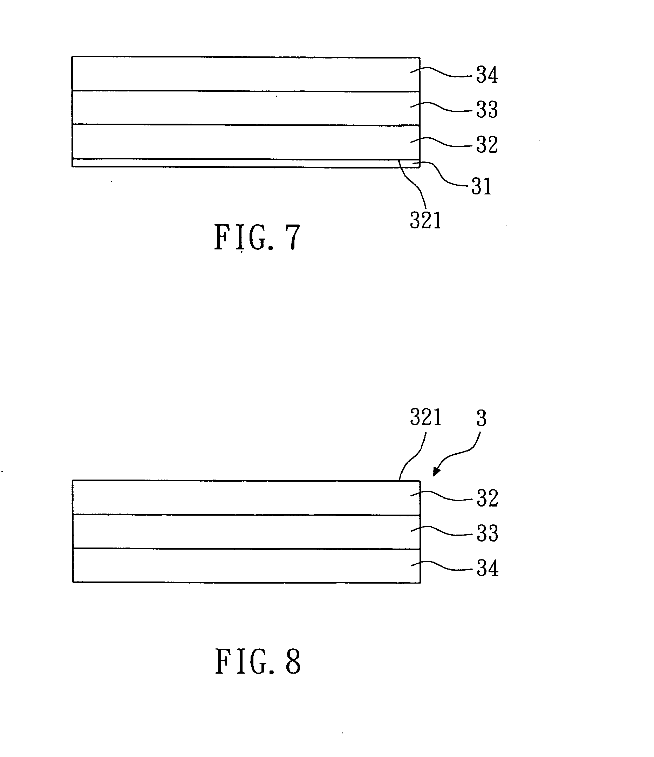

FIGs. 7 and 8 show schematic views of a method of fabricating the composite having a resin surface layer according to the first embodiment of the present invention. First, referring to FIG. 7, a release paper (Favini® ASTRAKAN™) 31 is provided. Next, a base is provided. The material of the base is a resin selected from a group consisting of PU, polyethylene (polyvinyl chloride), acrylic resin, polycarbonate, and epoxy resin. The base includes a plurality of additive particles selected from the group consisting of pigments, dyes, colorants, coloring matters, and pearl powders. The additive particles are randomly distributed in the base. In this embodiment, the material of the base is a single-component PU resin (U-BEST POLYMER INDUSTRY CO., LTD®, AT-508E™). The additive particles are pigment particles, and the material of the pigment is 41P series of TAH KONG CHEMICAL INDUSTRIAL CORP.

Then, the base is formed on the release paper 31 in the weight distribution of 120 g/m². After that, similar to the above, an energy field is applied to polarize the additive particles, so as to change the orientation of the additive particles. Next, the base is dried to form a surface layer 32 having a surface 321. The surface layer 32 is the same as the above resin surface layer.

Next, an adhesion layer 33 is formed on the surface layer 32. The material of the adhesion layer 33 is a two-component PU resin (U-BEST POLYMER INDUSTRY CO., LTD®, BD636M™), and has a weight distribution of 120 g/m². Then, the adhesion layer 33 is dried into a half-dried state at 70°C. After that, a bottom cloth layer 34 is formed on the adhesion layer 33, and the bottom cloth layer 34 is selected from a group consisting of a woven fabric, a non-woven fabric, leather, a microfiber, and a resin. In this embodiment, the bottom cloth layer 34 is artificial leather (San Fang). Finally, referring to FIG. 8, the release paper 31 is removed and inverted 180 degrees, and thus a composite 3 is formed.

Referring to FIG. 8 again, a schematic view of a composite having a resin surface layer according to the first embodiment of the present invention is shown. The composite 3 is fabricated by the method of the first embodiment. The composite 3 includes a bottom cloth layer 34, an adhesion layer 33, and a surface layer 32. The bottom cloth layer 34 is artificial leather (San Fang). The adhesion layer 33 is located on the bottom cloth layer 34, and the material of the adhesion layer 33 is a two-component PU resin (U-BEST POLYMER INDUSTRY CO., LTD®, BD636M™). The surface layer 32 is located on the adhesion layer 33. The surface layer 32 has a surface 321. The surface layer 32 has a base and a plurality of additive particles. The material of the base is a resin. The additive particles are arranged in a predetermined form instead of randomly distributed in the base, so that the surface 321 of the surface layer 32 can exhibit the visual effect of 3D texture, although the surface 321 is smooth and does not have a physical texture of bumps and pits.

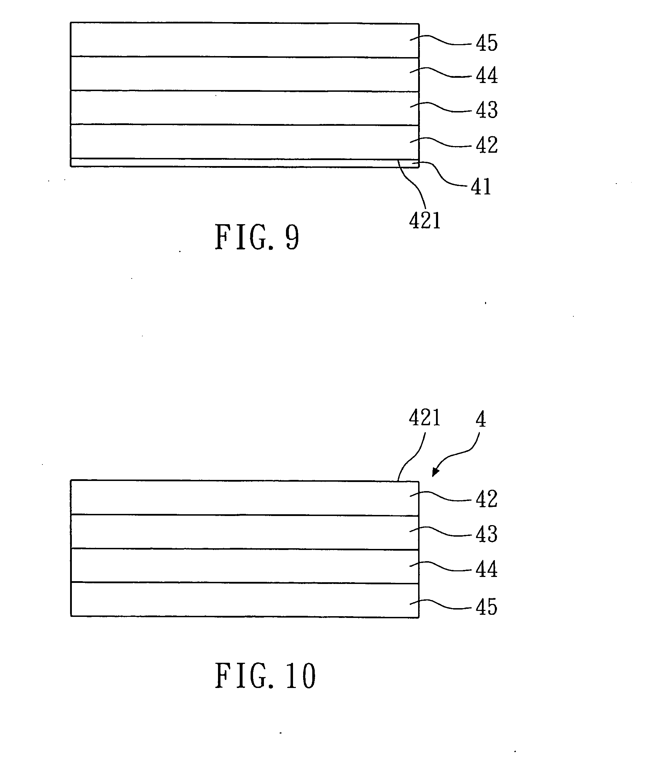

FIGs. 9 and 10 show schematic views of a method of fabricating the composite having a resin surface layer according to the second embodiment of the present invention. First, referring to FIG. 9, a release paper (Favini® ASTRAKAN™) 41 is provided. Next, a base is provided. The material of the base is resin and the base includes a plurality of first additive particles randomly distributed therein. In this embodiment, the material of the base is a single-component PU resin (U-BEST POLYMER INDUSTRY CO., LTD®, AT-508E™). The first additive particles are pigment particles, and the material of the pigment is 41P series of TAH KONG CHEMICAL INDUSTRIAL CORP.

Then, the base is formed on the release paper 41 in the weight distribution of 120 g/m². After that, similar to the above, an energy field is applied to polarize the first additive particles, so as to change the orientation of the first additive particles. Next, the base is dried to form a surface layer 42 having a surface 421. The surface layer 42 is the same as the above resin surface layer.

Next, an intermediate layer 43 is formed on the surface layer 42. The material of the intermediate layer 43 is resin and the intermediate layer 43 includes a plurality of second additive particles randomly distributed therein. The material of the intermediate layer 43 is selected from a group consisting of PU, polyethylene (polyvinyl chloride), acrylic resin, polycarbonate, and epoxy resin. The second additive particles are selected from a group consisting of pigments, dyes, colorants, coloring matters, and pearl powders. In this embodiment, the material of the intermediate layer 43 is a single-component PU resin (U-BEST POLYMER INDUSTRY CO., LTD®, AT-508E™). The second additive particles are pigment particles, and the material of the pigment is 41P series of TAH KONG CHEMICAL INDUSTRIAL CORP. Next, the intermediate layer 43 is formed on the surface layer 42 in the weight distribution of 120 g/m². It should be noted that the intermediate layer 43 can be directly dried without polarization.

Next, an adhesion layer 44 is formed on the intermediate layer 43. The material of the adhesion layer 44 is a two-component PU resin (U-BEST POLYMER INDUSTRY CO., LTD®, BD636M™), and has the weight distribution of 120 g/m². Thereafter, the adhesion layer 44 is dried into a half-dried state at 70°C. Next, a bottom cloth layer 45 is formed on the adhesion layer 44, and the bottom cloth layer 45 is selected from a group consisting of a woven fabric, a non-woven fabric, leather, a microfiber, and a resin. In this embodiment, the bottom cloth layer 45 is artificial leather (San Fang). Finally, referring to FIG. 10, the release paper 41 is removed and inverted 180 degrees, thus forming a composite 4.

Referring to FIG. 10 again, a composite having a resin surface layer according to the second embodiment of the present invention is shown. The composite 4 is fabricated by the method of the second embodiment and is substantially the same as the composite 3 of the first embodiment, except that the composite 4 further has an intermediate layer 43 between the surface layer 42 and the adhesion layer 44. The material of the intermediate layer 43 is resin, and the intermediate layer 43 includes a plurality of second additive particles randomly distributed therein.

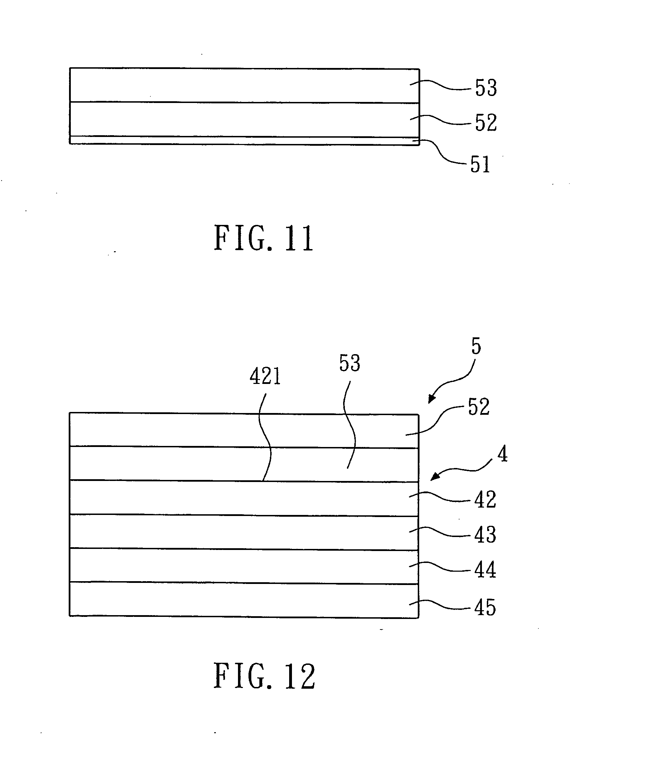

FIGs. 11 and 12 show schematic views of a method of fabricating the composite having a resin surface layer according to the third embodiment of the present invention. The fabrication method of this embodiment occurs subsequent to the second embodiment. First, referring to FIG. 11, a second release paper (Favini® ASTRAKAN™) 51 is provided. Next, a top layer 52 is formed on the second release paper 51. The material of the top layer 52 is resin and the top layer 52 includes a plurality of third additive particles randomly distributed therein. The material of the top layer 52 is selected from a group consisting of PU, polyethylene (polyvinyl chloride), acrylic resin, polycarbonate, and epoxy resin. The third additive particles are selected from the group consisting of pigments, dyes, colorants, coloring matters, and pearl powders. In this embodiment, the material of the top layer 52 is a single-component PU resin (U-BEST POLYMER INDUSTRY CO., LTD®, AT-508E™). The third additive particles are pigment particles, and the material of the pigment is 41P series of TAH KONG CHEMICAL INDUSTRIAL CORP. Next, the top layer 52 is formed on the second release paper 51 in the weight distribution of 120 g/m². It should be noted that the top layer 52 can be directly dried without polarization, and the third additive particles are required to have transparency.

Next, a second adhesion layer 53 is formed on the top layer 52. The material of the second adhesion layer 53 is a two-component PU resin (U-BEST POLYMER INDUSTRY CO., LTD®, BD636M™), and has a weight distribution of 120 g/m². Thereafter, the second adhesion layer 53 is dried into a half-dried state at 70°C.

Then, the second release paper 51, the top layer 52, and the second adhesion layer 53 are inverted, so as to adhere the second release paper 51 and the top layer 52 to the surface layer 42 of the composite 4 of the second embodiment by the use of the second adhesion layer 53. Finally, the second release paper 51 is removed, thus obtaining a composite 5.

Referring to FIG. 12 again, a schematic view of a composite having a resin surface layer according to the third embodiment of the present invention is shown. The composite 5 is fabricated by the method of the third embodiment. The composite 5 is substantially the same as the composite 4 of the second embodiment, except that the composite 5 further has a top layer 52 and a second adhesion layer 53. The second adhesion layer 53 is located on the surface layer 42, and the top layer 52 is located on the second adhesion layer 53. The material of the top layer 52 is resin, and the top layer 52 includes a plurality of third additive particles randomly distributed therein. The third additive particles are required to have transparency.

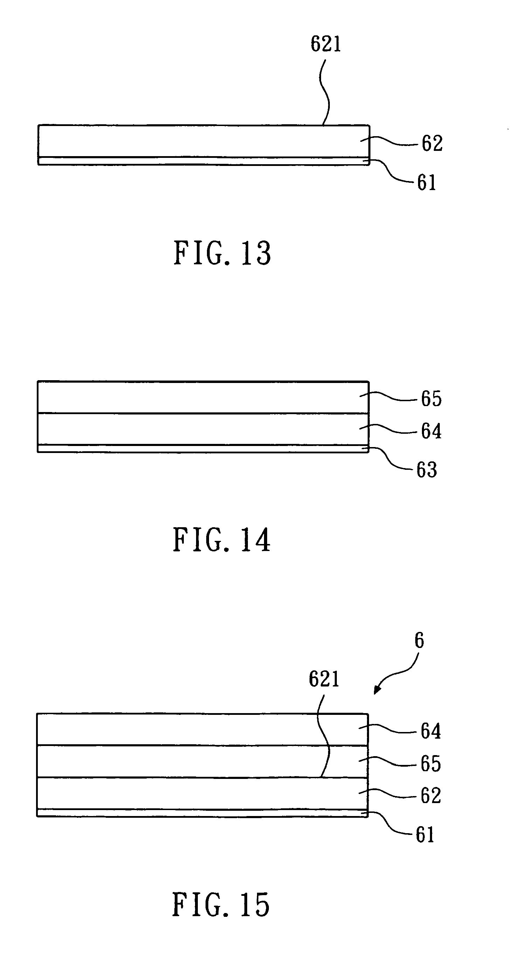

FIGs. 13 and 15 show schematic views of a method of fabricating the composite having a resin surface layer according to the fourth embodiment of the present invention. First, referring to FIG. 13, a bottom cloth layer 61 is provided. The bottom cloth layer 61 is selected from a group consisting of a woven fabric, a non-woven fabric, leather, a microfiber, and a resin. In this embodiment, the bottom cloth layer 61 is artificial leather (San Fang).

Next, a base is provided. The material of the base is a resin selected from the group consisting of PU, polyethylene (polyvinyl chloride), acrylic resin, polycarbonate, and epoxy resin. The base includes a plurality of first additive particles, and the first additive particles are selected from the group consisting of pigments, dyes, colorants, coloring matters, and pearl powders. The first additive particles are randomly distributed in the base. In this embodiment, the material of the base is a single-component PU resin (U-BEST POLYMER INDUSTRY CO., LTD®, AT-508E™). The first additive particles are pigment particles, and the material of the pigment is 41P series of TAH KONG CHEMICAL INDUSTRIAL CORP.

Then, the base is formed on the bottom cloth layer 61 in the weight distribution of 120 g/m². After that, similar to the above, an energy field is applied to polarize the first additive particles, so as to change the orientation of the first additive particles. Next, the base is dried to form a surface layer 62 having a surface 621. The surface layer 62 is the same as the above resin surface layer.

Next, referring to FIG. 14, a release paper (Favini® ASTRAKAN™) 63 is provided. Then, a top layer 64 is formed on the release paper 63. The material of the top layer 64 is resin, and the top layer 64 includes a plurality of second additive particles randomly distributed therein. The material of the top layer 64 is selected from a group consisting of PU, polyethylene (polyvinyl chloride), acrylic resin, polycarbonate, and epoxy resin. The second additive particles are selected from a group consisting of pigments, dyes, colorants, coloring matters, and pearl powders. In this embodiment, the material of the top layer 64 is a single-component PU resin (U-BEST POLYMER INDUSTRY CO., LTD®, AT-508E™). The second additive particles are pigment particles, and the material of the pigment is 41P series of TAH KONG CHEMICAL INDUSTRIAL CORP. Next, the top layer 64 is formed on the release paper 63 in the weight distribution of 120 g/m². It should be noted that the top layer 64 can be directly dried without polarization, and the second additive particles are required to have transparency.

Next, an adhesion layer 65 is formed on the top layer 64. The material of the adhesion layer 65 is a two-component PU resin (U-BEST POLYMER INDUSTRY CO., LTD®, BD636M™), and has a weight distribution of 120 g/m². Thereafter, the adhesion layer 65 is dried into a half-dried state at 70°C.

Next, referring to FIG. 15, the release paper 63, the top layer 64, and the adhesion layer 65 are inverted, so as to adhere the release paper 63 and the top layer 64 to the surface 621 of the surface layer 62 by the use of the adhesion layer 65. Finally, the release paper 63 is removed, thus obtaining a composite 6.

Referring to FIG. 15 again, a composite having a resin surface layer according to the third embodiment of the present invention is shown. The composite 6 is fabricated by the method of the third embodiment. The composite 6 includes a bottom cloth layer 61, a surface layer 62, an adhesion layer 65, and a top layer 64. The bottom cloth layer 61 is artificial leather (San Fang). The surface layer 62 is located on the bottom cloth layer 61. The surface layer 62 has a surface 621. The surface layer 62 has a base and a plurality of first additive particles. The material of the base is a resin, the first additive particles are arranged in a predetermined form instead of randomly distributed in the base, so that the surface 621 of the surface layer 62 can exhibit the visual effect of 3D texture, although the surface 621 of the surface layer 62 is smooth and does not have a physical texture of bumps and pits.

The adhesion layer 65 is located on the surface layer 62, and the material of the adhesion layer 65 is a two-component PU resin (U-BEST POLYMER INDUSTRY CO., LTD®, BD636M™). The top layer 64 is located on the adhesion layer 65. The material of the top layer 64 is resin, and the top layer 64 includes a plurality of second additive particles randomly distributed therein. The second additive particles are required to have transparency.

## Claims

1. A method of fabricating a composite (3; 4; 5) having a resin surface layer (32; 42), comprising:
(a) providing a release paper (31; 41);
(b) forming a resin surface layer (32; 42) on said release paper by
(b1) forming a base made of a resin on said release paper (31; 41), which includes a plurality of additive particles randomly distributed in the base;
(b2) applying a magnetic or an electric field to polarize the additive particles to thereby change the orientation of the additive particles or to thereby change the distribution of the additive particles so that the additive particles have a predetermined density or to thereby change the angle of the additive particles so that the additive particles are uniformly distributed in the base and have a predetermined angle distribution, so that the additive particles are arranged in a predetermined form; and
(b3) drying the base to thereby provide a surface exhibiting a visual effect of a 3D texture;
(c) forming a first adhesion layer (33; 44) on the resin surface layer;
(d) forming a bottom cloth layer (34; 45) on the first adhesion layer; and
(e) removing the release paper to form said composite (3; 4).

2. The method as claimed in Claim 1, further comprising a step of forming an intermediate layer (43) on the resin surface layer (42), wherein the first adhesion layer (44) is formed on the intermediate layer (43) in Step (c).

3. The method as claimed in Claim 2, wherein the material of the intermediate layer (43) is resin and the intermediate layer comprises a plurality of second additive particles randomly distributed therein.

4. The method as claimed in any of claims 1 to 3, after Step (c), further comprising:
(f) providing a second release paper (51);
(g) forming a top layer (52) on the second release paper (51);
(h) forming a second adhesion layer (53) on the top layer;
(k) adhering the second adhesion layer (53) to the resin surface layer (42) of the composite (4), so that the second release paper (51) and the top layer (52) are adhered to the resin surface layer (42) of the composite (4); and
(l) removing the second release paper (51) to thereby form said composite (5).

5. The method as claimed in Claim 4, wherein the material of the top layer (52) is resin and the top layer comprises a plurality of third additive particles randomly distributed therein.

6. The method as claimed in any of the preceding claims, wherein the material of the base of Step (b1) is PU, polyethylene (polyvinyl chloride), acrylic resin, polycarbonate or epoxy resin, and the additive particles are dyes or pearl powders.

7. A composite (3; 4; 5) having a resin surface layer, comprising:
a bottom layer of a woven fabric, a non-woven fabric, leather, a microfiber or a resin;
an adhesion layer (33; 45), located on the bottom layer; and
a resin surface layer (32; 42) produced according to a method as claimed in any of claims 1 to 6, which is located on the adhesion layer (33; 45).

8. The composite as claimed in Claim 7, wherein the additive particles are dyes and the composite further comprises an intermediate layer (43) between the resin surface layer and the adhesion layer, the material of the intermediate layer is resin and the intermediate layer comprises a plurality of second additive particles randomly distributed therein.

9. The composite as claimed in Claim 8, further comprising a second adhesion layer (53) and a top layer (52), wherein the second adhesion layer is located on the resin surface layer (42), and the top layer (52) is located on the second adhesion layer (53), the material of the top layer is resin, and a plurality of third additive particles is randomly distributed in the top layer.

## Patentansprüche

1. Verfahren zur Herstellung eines Verbundmaterials (3; 4; 5) mit einer Kunstharz-Oberflächenschicht (32; 42), umfassend:
(a) Bereitstellen eines Trennpapiers (31; 41);
(b) Ausbilden einer Kunstharz-Oberflächenschicht (32; 42) auf dem Trennpapier durch
(b1) Ausbilden einer Basis aus einem Kunstharz auf dem Trennpapier (31; 41), die eine Mehrzahl von Additiv-Partikeln aufweist, die zufällig in der Basis verteilt sind;
(b2) Anlegen eines magnetischen oder eines elektrischen Feldes, um die Additiv-Partikel zu polarisieren, um **dadurch** die Aufrichtung der Additiv-Partikel zu ändern oder um **dadurch** die Verteilung der Additiv-Partikel, so dass die Additiv-Partikel eine vorbestimmte Dichte aufweisen, oder um **dadurch** die Winkelstellung der Additiv-Partikel zu ändern, so dass die Additiv-Partikel gleichmäßig in der Basis verteilt sind und eine vorbestimmte Winkelverteilung haben, so dass die Additiv-Partikel in einer vorbestimmten Form angeordnet sind, und
(b3) Trocknen der Basis, um **dadurch** eine Oberfläche auszubilden, die die visuelle Wirkung einer 3D-Struktur hat;
(c) Ausbilden einer ersten Haft- bzw. Klebeschicht (33; 44) auf der Kunstharzoberflächen-Schicht;
(d) Ausbilden einer unteren Gewebeschicht (34; 45) auf der ersten Haft- bzw. Klebeschicht, und
(e) Entfernen des Trennpapiers zur Bildung des Verbundmaterials (3; 4).

2. Verfahren nach Anspruch 1, weiterhin umfassend einen Schritt des Ausbildens einer Zwischenschicht (43) auf der Kunstharzoberflächen-Schicht (42), wobei die erste Haft- bzw. Klebeschicht (44) auf der Zwischenschicht (43) im Schritt (c) ausgebildet wird.

3. Verfahren nach Anspruch 2, **dadurch gekennzeichnet, dass** das Material der Zwischenschicht (43) ist ein Kunstharz ist und die Zwischenschicht eine Mehrzahl von zweiten Additiv-Partikeln aufweist, die darin zufällig verteilt sind.

4. Verfahren nach einem der Ansprüche 1 bis 3, nach dem Schritt (e) weiterhin umfassend:
(F) Bereitstellen eines zweiten Trennpapiers (51);
(G) Ausbilden einer Deckschicht (52) auf dem zweiten Trennpapier (51);
(H) Ausbilden einer zweiten Haftschicht (53) auf der Deckschicht;
(K) Ankleben der zweiten Haftschicht (53) an die Kunstharz-Oberflächenschicht (42) des Verbundmaterials (4), so dass das zweite Trennpapier (51) und die obere Schicht (52) an der Kunstharz-Oberflächenschicht (42) des Verbundmaterials (4) anhaften, und
(L) Entfernen der zweiten Trennpapiers (51), um so das Verbundmaterial (5) auszubilden.

5. Verfahren nach Anspruch 4, wobei das Material der Deckschicht (52) ein Kunstharz und die Deckschicht eine Vielzahl von dritten Additiv-Partikeln aufweist, die darin zufällig verteilt sind.

6. Verfahren nach einem der vorhergehenden Ansprüche, wobei das Material der Basis von Schritt (b1) PU, Polyethylen (Polyvinylchlorid), Acrylharz, Polycarbonat oder Epoxidharz ist und die Additiv-Partikel Farbstoffe oder Perlmuttpulver ist.

7. Verbundmaterial (3; 4; 5) mit einer Kunstharz-Oberflächenschicht, umfassend:
eine untere Schicht aus einem Gewebe, einem nicht-gewebten Stoff, Leder, einer Mikrofaser oder einem Kunstharz;
eine Haft- bzw. Klebeschicht (33; 45), auf der unteren Schicht angeordnet ist, und
eine Kunstharz-Oberflächenschicht (32; 42), hergestellt nach einem Verfahren nach einem der Ansprüche 1 bis 6, die auf der Idaft- bzw. Klebeschicht (33, 45) angeordnet ist.

8. Verbundmaterial nach Anspruch 7, wobei die Additiv-Partikel Farbstoffe und das Verbundmaterial ferner eine Zwischenschicht (43) zwischen der Kunstharz-Oberflächenschicht und der Haft- bzw. Klebeschicht aufweist, wobei das Material der Zwischenschicht eine Kunstharz ist und die Zwischenschicht eine Mehrzahl von zweiten Additiv-Partikeln aufweist, die darin zufällig verteilt sind.

9. Verbundmaterial nach Anspruch 8, weiterhin umfassend eine zweite Haft- bzw. Klebeschicht (53) und eine Deckschicht (52), wobei die zweite Haft- bzw. Klebeschicht auf der Kunstharzoberflächen-Schicht (42) angeordnet ist, und die Deckschicht (52) auf der zweiten Haft- bzw. Klebeschicht (53) angeordnet ist, wobei das Material der Deckschicht ein Kunstharz ist und eine Vielzahl von dritten Additiv-Partikeln gleichmäßig in der Deckschicht verteilt sind..

## Revendications

1. Une méthode de fabrication d'un composite (3; 4; 5) ayant une couche superficielle de résine (32; 42), comprenant:
(a) la mise à disposition d'un intercalaire (31; 41);
(b) la formation d'une couche superficielle de résine (32; 42) sur ladite intercalaire au moyen de:
(b1) la formation d'une base en résine sur ladite intercalaire (31; 41), laquelle comprend plusieurs particules additives réparties de façon aléatoire dans la base;
(b2) l'application d'un champ magnétique ou électrique pour polariser les particules additives de façon à modifier l'orientation des particules additives ou pour changer la distribution des particules additives de telle manière que les particules additives présentent une densité prédéterminée ou pour changer l'orientation des particules additives de manière à ce que les particules additives sont distribuées de manière uniforme au sein de la base et présente une distribution déterminée de orientation, afin que les particules additives sont disposées suivant une forme prédéterminée; et
(b3) le séchage de la base pour que la surface de la base ait un effet visuel de texture 3D;
(c) la formation d'une première couche d'adhésion (33; 34) sur la couche superficielle de résine;
(d) la formation d'une couche d'étoffe inférieure (34, 45) sur la couche superficielle de résine;
(e) la suppression de l'intercalaire de manière à former ledit composite (3; 4).

2. La méthode telle que revendiquée dans la revendication 1, comprenant en outre une étape de formation d'une couche intermédiaire (43) sur la couche superficielle de résine (42), dans laquelle la première couche d'adhésion (44) est formée sur la couche intermédiaire (43) de l'étape (c).

3. La méthode telle que revendiquée dans la revendication 2, dans laquelle le matériau de la couche intermédiaire (43) est de la résine et la couche intermédiaire comprend en son sein plusieurs secondes particules additives distribuées de manière aléatoire.

4. La méthode telle que revendiquée dans l'une quelconque des revendications 1 à 3, comportant en outre, à la suite de l'étape (e):
(f) la mise à disposition d'une seconde intercalaire (51);
(g) la formation d'une couche supérieure (52) sur la seconde intercalaire (51):
(h) la formation d'une seconde couche d'adhésion (53) sur la couche supérieure ;
(k) l'adhérence de la seconde couche d'adhésion (53) à la couche superficielle de résine (52) du composite (4), de telle manière que la seconde intercalaire (51) et la couche supérieure (52) adhèrent à la couche superficielle de résine (42) du composite (40); et
(l) la suppression de la seconde intercalaire (51) de manière à former ledit composite (5).

5. La méthode telle que revendiquée dans la revendication 4, dans laquelle le matériau de la couche supérieure (52) est de la résine et la couche supérieure comporte en son sein plusieurs troisièmes particules additives distribuées de manière aléatoire.

6. La méthode telle que revendiquée dans l'une quelconque des revendications précédentes, dans laquelle le matériau de base de l'étape (b) est PU, du polyéthylène (du chlorure de polyvinyl), de la résine acrylique, de la résine polycarbonate ou époxy; et les particules additives sont des colorants ou de la poudre de perle.

7. Un composite (3; 4; 5) ayant une couche superficielle de résine, comprenant:
une couche inférieure en matériau tissé, en matériau non tissé, en laine, en microfibre ou en résine;
une couche d'adhésion (33; 45), située sur la couche inférieure; et
une couche superficielle de résine (32, 42) produite selon une méthode telle que revendiquée dans l'une quelconque des revendications 1 à 6, laquelle se situe sur la couche d'adhésion (33; 45).

8. Le composite tel que revendiqué dans la revendication 7, dans lequel les particules additives sont des colorantes et le composite comporte en outre une couche intermédiaire (43) entre la couche superficielle de résine et la couche d'adhésion, le matériau de la couche intermédiaire est de la résine et la couche intermédiaire comporte en son sein plusieurs secondes particules additives distribuées de manière aléatoire.

9. Le composite tel que revendiqué dans la revendication 8, comprenant en outre une seconde couche d'adhésion (53) et une couche supérieure (52), dans lequel la seconde couche d'adhésion est disposée sur la couche superficielle de résine (42), et la couche supérieure (52) est située sur la seconde couche d'adhésion (53), le matériau de la couche supérieure étant en résine, et plusieurs troisièmes particules additives sont distribuées de manière aléatoire dans la couche supérieure.
